# EUROPEAN PATENT SPECIFICATION

(11) **EP 1 853 024 B1**
(45) Date of publication and mention of the grant of the patent: **27.02.2013**
(21) Application number: 06027101.2
(22) Date of filing: 29.12.2006
(51) Int. Cl.: H04L 29/06

(54) **Switching network employing adware quarantine techniques**
Schaltnetzwerk mit Adwarequarantänefunction
Réseau de commutation utilisant une function de quarantaine du adware

(30) Priority: 05.05.2006 US 429477; 05.05.2006 US 429478; 23.06.2006 US 474033; 20.07.2006 US 491052; 18.08.2006 US 506729
(43) Date of publication of application: 07.11.2007
(73) Proprietor: Broadcom Corporation, Irvine, CA 92617 (US)
(72) Inventor: Bennett, James D., 92672 San Clemente, CA (US)
(74) Representative: Jehle, Volker Armin

(56) References cited:
- WO-A-97/12321
- US-A1- 2006 075 494
- US-A1- 2006 085 528
- US-A1- 2006 095 971
- US-A1- 2006 174 345

## Description

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

**1. Field of the Invention**

This invention generally relates to communication infrastructures, and, more particularly, to switching node operations in a packet switched communication network.

**2. Related Art**

Internet source devices use Internet networks and switching devices to transport audio, video, and data packets to client devices. An Internet infrastructure typically includes switching devices such as routers, switches, packet switched exchanges, access points and Internet service provider's networks (ISPN), Internet communication pathways and end point devices. The client devices include personal or laptop computers, servers, set top boxes, handheld data/communication devices and other client devices, for example.

These audio, video, and data packet transportation is in general is unrestrained. The client devices in such unrestrained environment become target of unwanted adware. Such adware may inflict harm to the client devices in the form of inconvenience to stealing private information and spying. However, often, client devices are typically incapable of eliminating such packets or packet flow. For example, many annoying advertisement related popup windows deceptively make users click on wrong buttons without being aware of the fact that they infect end point devices with variety of undesirable codes. These undesirable codes, known as adware, transfer personal data to unknown servers, which may be misused. Users often purchase multiple adware processing packages as current packages often fail to address all adware in use. Although sometimes free, most of these adware processing packages are expensive, especially considering the multiple package burden.

Often, such web pages and popup advertisements mislead the users in to clicking on wrong buttons, without the user being aware of such actions infecting the client devices. Tools that block such adware block all popup adware, even those adware desired by the users. Problems also occur when attempting to close a popup window, e.g., the "upon-close()" action of the popup often causes another popup to launch or attempts to infect the computer. Fake "OK" or "Cancel" buttons also cause similar problems. In addition, oversized or frameless popup windows makes it difficult for a user to close a window. Typically, only humans can identify such unwanted adware upon sight.

Further limitations and disadvantages of conventional and traditional approaches will become apparent to one of ordinary skill in the art through comparison of such systems with the present invention.

US 2006/085528 describes a method for monitoring network communications between a protected computer and a remotely-located computer such as a Web server, wherein a data packet transmitted from a protected computer is intercepted and the destination address of the data packet is compared against a list of approved destination addresses. When the destination address is included in the list of approved destination addresses, then the packet is delivered to the destination address. If the packet is not addressed to an approved address, then it is evaluated for pestware traces.

Among others, one object of the invention is to provide an apparatus and a method for handling quarantine service functions more efficiently.

According to the invention, there are provided a communication system as defined by independent claim 1, circuitry for use in an intermediate routing node as defined by independent claim 5 and a method for use in an intermediate routing node as defined by independent claim 7.

Further advantageous features of the invention are defined by the dependent claims.

The present invention is directed to apparatus and methods of operation that are further described in the following Brief Description of the Drawings, the Detailed Description of the Invention, and the Claims.

Advantageously, the quarantine function is selected based upon characteristics of the adware identified through the successful comparison.

Advantageously, the interaction by the first intermediate routing node with the web browsing software results in presentation by the client device of a human challenge.

Advantageously, the first intermediate routing node, after identifying the successful comparison, also interacts with the server device regarding the successful comparison.

Advantageously, the interaction with the server device comprising a human challenge.

Advantageously, the interaction with the server device comprising a quarantine function.

Advantageously, the communication infrastructure further comprises a support server, and the first intermediate routing node, after identifying the successful comparison, seeks assistance of the support server before interacting with the web browsing software.

Advantageously, the quarantine function prevents the adware from automatically being presented on the client device.

Advantageously, a user of the client device can override the quarantine function.

Advantageously, the user can override the quarantine function by passing a human challenge.

Advantageously, the intermediate routing node stores at least a first parameter associated with a first of the plurality of predefined templates, and the intermediate routing node selects the quarantine function from a plurality of differing quarantine functions based the at least the first parameter.

Advantageously, the adware processing functionality comprising interrupting delivery of the first packet to the destination device.

Advantageously, the adware processing functionality comprising requesting presentation of a message by the destination device, the message relating to the successful comparison.

Advantageously, the message comprising a human challenge.

Advantageously, the adware processing functionality comprising interaction with the source device regarding the successful comparison.

Advantageously, the processing circuitry fails to match any of the plurality of predefined templates with the second packet, and the processing circuitry delivers the second packet to the destination device via the second interface circuitry.

Advantageously, the interacting with the first client device comprising gathering data.

Advantageously, the interacting with the first client device comprising delivering a human challenge.

Advantageously, the interacting with the first client device comprising preventing automatic presentation on the first client device.

Advantageously, the adware characteristic is associated with specific adware and the interaction with the first client device is based on statistics relating to the specific adware.

Advantageously, the adware characteristic is associated with malware and the interaction with the first client device comprising coordinating quarantine services.

Features and advantages of the present invention will become apparent from the following detailed description of the invention made with reference to the accompanying drawings.

### BRIEF DESCRIPTION OF THE DRAWINGS

**FIG. 1** is a schematic block diagram illustrating an embodiment of a communication infrastructure built in accordance with the present invention, wherein intermediate packet pathway nodes process incoming packets for adware content, in conjunction with an adware analysis server;

**FIG. 2** is a schematic block diagram illustrating functionality of communication applications distributed between a client device and intermediate packet pathway nodes of the communication infrastructure of **FIG. 1****,** according to the present invention;

**FIG. 3** is a schematic block diagram illustrating interactions between the elements of the communication infrastructure of **FIG. 1****,** in accordance with the present invention;

**FIG. 4** is a schematic block diagram illustrating interactions between the communication applications incorporated into source and client devices, and intermediate packet pathway nodes in the communication infrastructure of **FIG.1****,** in accordance with the present invention;

**FIG. 5** is a schematic block diagram illustrating functions of browser modules incorporated into the client devices;

**FIG. 6** is a schematic block diagram illustrating a network node (switch/router/ISPN/AP) constructed in accordance with the embodiment of **FIG. 1** of the present invention;

**FIG. 7** is a schematic block diagram illustrating an adware analysis circuitry constructed in accordance with the embodiment of **FIG. 1** of the present invention;

**FIG. 8** is a schematic block diagram illustrating a router constructed in accordance with the embodiment of **FIG. 1** of the present invention;

**FIG. 9** is a schematic block diagram illustrating end point devices (source and/or client devices) constructed in accordance with the embodiments of **FIG. 1** of the present invention;

**FIG. 10** is a flowchart illustrating general flow of functionality of intermediate packet pathway node of FIG. 1;

**FIG. 11** is a flowchart illustrating functionality of intermediate packet pathway node of **FIG. 1****,** in detail;

**FIG. 12** is a flowchart illustrating adware identification and processing functionality of the intermediate packet pathway node of **FIG. 1****,** in detail; and

**FIG. 13** is a flowchart illustrating functionality of adware identification circuitry, in devices of **FIGs. 6** and **7**.

### DETAILED DESCRIPTION OF THE INVENTION

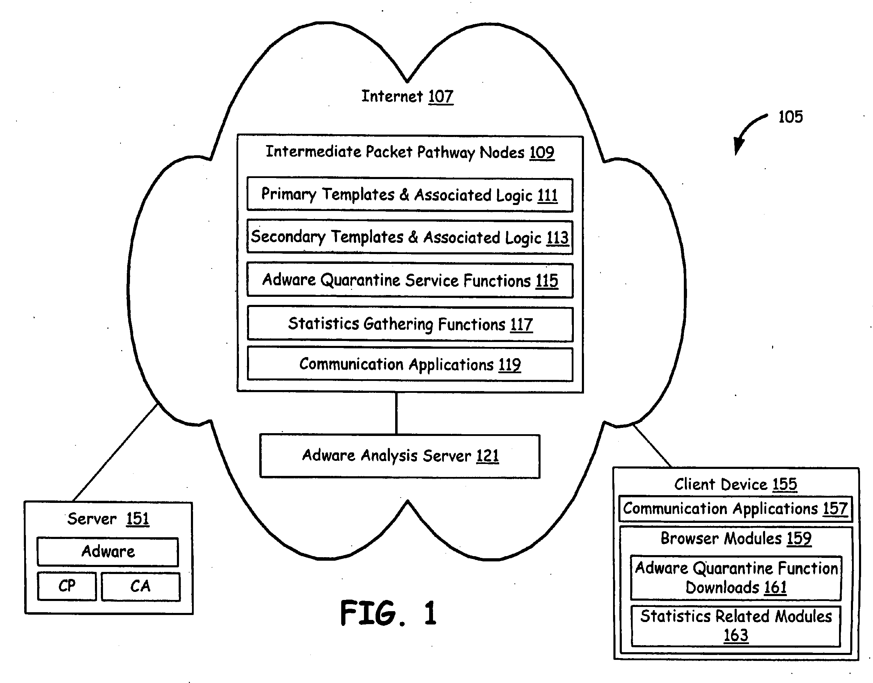

**FIG. 1** is a schematic block diagram illustrating an embodiment of a communication infrastructure 105 built in accordance with the present invention, wherein intermediate packet pathway nodes 109 process incoming packets for adware content, in conjunction with an adware analysis server 121. To carry this out, the intermediate packet pathway nodes 109 analyze packets exchanged through the Internet network 107 to identify adware. This analysis involves comparison of each packet received with templates that attempt to identify either a characteristic of a particular adware or a characteristic of all or many types of adware. In the following descriptions, intermediate packet pathway nodes, intermediate routing node and intermediate nodes have been used interchangeably, and adware analysis server and support server have been used interchangeably.

Upon identifying adware, the intermediate packet pathway nodes 109 with support from the adware analysis server 121 take various actions depending on the nature of the adware identified. For example, if the adware identified constitutes malware, the client device 155 and the server 151 will receive aggressive warnings, human challenges, and requests to coordinate quarantining of such adware. If the identified adware is new, the client device 155 is informed of the "unknown" status and may receives a request for mild quarantining. If the identified adware was considered very helpful or essential by previous users, the client 155 may be advised to ignore quarantining and immediately present the adware.

Along with informing the client device 155 and possibly coordinating some degree of quarantining and human challenges, the intermediate packet pathway nodes 109 and the adware analysis server 121 gather statistics regarding identified adware, which is used during future encounters of the same adware. Much of these statistics are gathered from the users of client devices (e.g., the client device 155) and of the server 151. Statistics include whether the user believes the received adware to be annoying, desired, malware, etc. Based on these statistics, the intermediate packet pathway nodes 109 and the adware analysis server 121 determine future interaction with repeated adware encounters.

More particularly, packets sourced from a source device, e.g., a server 151, and destined for a browser of a client device 155 that are part of a web page are processed for adware content. The intermediate packet pathway nodes 109 identify the adware by comparing each received packet with primary and/or secondary templates and apply associated logic. For this, the intermediate nodes 109 contain primary templates with associated logic 111 and secondary templates with associated logic 113. After identification of the adware and in response to the application of associated logic, the intermediate nodes 109 process the packets containing adware by applying adware quarantine service functions 115. As a part of this adware quarantine processing, the intermediate nodes 109 make an entry of source device address, client device address and actions to be performed (hereafter, quarantine status indications) on the end point devices. The intermediate nodes 109 follow up and perform quarantine status indications. Communication applications are incorporated into the intermediate nodes 109 and end point devices 151, 155 such as 119 and 157, for this purpose. They coordinate communications between end point devices 151, 155 and the intermediate nodes 109, and allow displaying of messages with human challenge mechanisms sent by the intermediate nodes 109.

The intermediate nodes 109 contain statistics gathering functions 117. They work in conjunction with statistics related modules 163 to gather statistical data regarding the adware or the server 151, from which the adware originated. The statistical data collected includes user feedback regarding adware and servers, and may indicate a presence of malware, annoying adware, or helpful, entertaining, or essential adware. The adware analysis server 121, alternatively, may store all such statistical data regarding a variety of servers and adware. Such statistical data are collected from the intermediate nodes 109 for further analysis. The statistical data may also be gathered and analyzed by the server 121. When intermediate nodes 109 request, the adware analysis server 121 provides such analyzed statistical data. The adware analysis server may also perform adware quarantine processing on behalf of the intermediate nodes 109. It may be noted that the external servers 121 shown may represent a server communicatively coupled to the intermediate nodes 109, residing at the same premises or may represent servers of external vendors that is located in a remote place.

The client device 155 further contains browser modules 159, which may simply be software add-ons. The browser modules may further contain adware quarantine function downloads 161, that assist the intermediate nodes 109 in quarantining the server 151 and/or the adware. The server 151 also contains aspects of invention such as communication applications among other contents such as communication pathway and adware themselves.

The intermediate nodes 109 may be any among many variety of switching devices that routes web pages with adware, from the server 151 to the client device 155. For example, the intermediate nodes 109 may be an access point, a router, or packet switching device. That is, the routing pathway between the end point devices may consist of personal access points, service provider's access points, other service provider equipment, and plurality of backbone nodes, all of which are represented by the intermediate nodes 109.

In accordance with the present invention, the intermediate nodes 109 identify the packets with adware characteristic. The intermediate nodes 109 prevent client device 155 being adversely affected by the adware, by performing adware quarantine processing. As a part of adware quarantine processing, the intermediate nodes 109, in conjunction with the adware analysis server 121, may send messages, with or without human challenge mechanism, to the server 151 and client device 155. These messages may include information, warnings, interrupting actions taken and statistical data gathered, regarding the adware, which may be presented to the users of the server 151 and the client device 155 in the form of popup assisted by a browser or an operating system. The client device 155 may also receive popup windows with human challenge mechanism that prompt the user to enter user's opinions on the adware and the source device 151.

The primary and secondary templates in 111 and 113 may contain bit sequences that recognize domain names, IP addresses, DNS handle, filenames, and segments of codes related to a plurality of adware codes, in a database, and these templates help identify the malware. For example, an adware characteristic might comprise one or more payload bit sequences, the existence of which in a packet indicates that at least a portion of a certain adware exists within the packet payload. An adware characteristic might also include source address match with that of a known server that repeatedly attempts to send an adware. Similarly, adware characteristics may include file name text sequences, other payload, or supplemental packet field matches that at least suggest that an adware may be present.

When the packet containing a portion of an adware code arrives at any of the intermediate nodes 109, the packet contents are compared with one or more of primary templates and if a match for an adware occurs, the associated logic is applied. If adware likelihood is detected during comparison with primary templates, the packet contents are compared with secondary templates and the associated logic are applied, repeatedly until a conclusion is reached. The logic associated with the secondary templates vector the packets for local adware quarantine service function 115 processing or external quarantine service function processing.

The adware quarantine service functions 115 in conjunction with communication applications 119 perform variety of predefined tasks once adware is detected. For example, the communication applications 119 might communicate a warning to one or both of the end point devices involved in the exchange but continue delivery of the packet. Alternatively, the packet may be discarded with or without the warning. Instead of discarding a packet, the adware quarantine service function 115 may modify the packet to neutralize the negative effects of the adware with or without affecting the functionality of the overall communication exchange. For example, if a packet with adware characteristics thus detected is a part of a benign but annoying popup advertisement, then the packet may be discarded with an appropriate warning message sent to both of the end point devices.

In situations where the adware attempts to mislead the intermediate nodes 109 or the client device 155, the communication applications 119 may employ a mechanism of human challenge. The human challenge may include few digits or alphabets with orientations unlike alphanumeric displays of the computer, and a human user is expected to respond by keying in these alphanumeric characters and give approval for transmission of such packets. This procedure allows transmission of packets that are not necessarily malicious or misleading, but may have similar file names or code segments. Along with the human challenge mechanism, the intermediate network nodes 109 may also collect statistical information for further adware quarantine processing, if necessary. The intermediate nodes 109 may send messages, information, warnings, and assistances regarding the adware, together with the challenge mechanism. The information regarding the adware may include server 151 domain name, IP address, name and code of the adware, the functions of the adware and how if affects the client device 155, statistical data regarding the server 151 and adware, and remedies available to fix the adware.

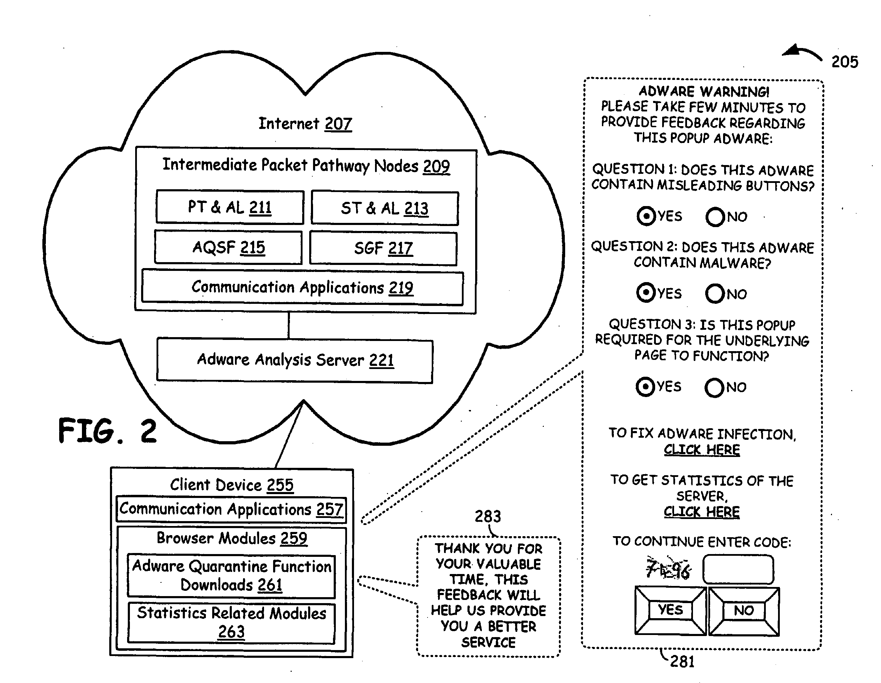

An important aspect of the adware quarantine processing, employed by the intermediate nodes 109 and/or the adware analysis server 121, is gathering of statistical data regarding the adware and the server 151 and utilizing such data in determining quarantine status indications. For this, the intermediate nodes 109 and/or the adware analysis server 121 employ the statistics gathering functions 117 and the statistical related modules 163. When an adware appears on the client device's browser, the user opinion regarding that adware and the server 151 is collected by the intermediate nodes 109 and/or the adware analysis server 121. Such collected statistical data is analyzed and utilized in course of actions in the quarantine status indications, in the future, when the packets from the server 151 or the adware flow through the intermediate nodes 109. This course of actions involves delivering packets based upon client device's browser settings. The browser settings for adware related issues is assisted by the browser modules 159, which allow user to allow or disallow adware from a server 151 with statistical data of «n»% dislike for the adware or the server 151, for example. For gathering statistical data, the intermediate nodes may send popup window pages containing various objective types of questions and a human challenge mechanism. For example, the questions may request a user for opinions regarding whether the adware contains misleading buttons, an oversized window, or a frameless window, or whether the popup is necessary for the underlying web page's function. A more detailed description of statistical data gathering by the intermediate nodes 109 and/or the adware analysis server 121 can be found in description with reference to the **FIG. 2****.**

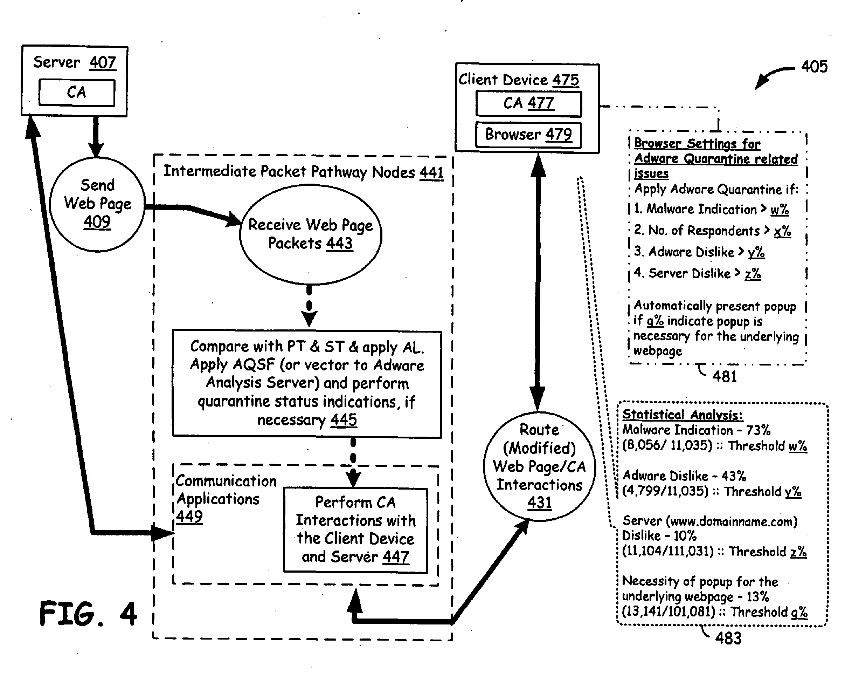

The add-ons provided by the browser modules 159 allow user of the client device 155 to set the browser to disallow undesirable adware. The settings may include thresholds such as disallow an adware if malware indication is above «w»%, number of respondents is above «x»%, adware dislike is above «y»%, server dislike is above «z»% or automatically present the adware if «g»% indicate the adware is necessary for the underlying webpage. The user may enter the exact values within « », in terms of percentage, and further, in reality, the settings may not only be limited to the above-mentioned thresholds. When requested by the user of the client device 155, the intermediate nodes 109 and/or the adware analysis server 121 provide statistical data regarding an adware or the corresponding server. For example, the statistical data may be presented as: "Malware Indication: 73% (8,056 of 11,035 respondents opined this adware contains a malware), Threshold Setting: w%", or "Necessity of popup for the underlying webpage: 13% (13,141 of 101,081 respondents opined this adware is not necessary for the underlying webpage), Threshold Setting: g%". A more detailed description of browser adware related settings and statistical presentation is provided with reference to the **FIG. 4****.**

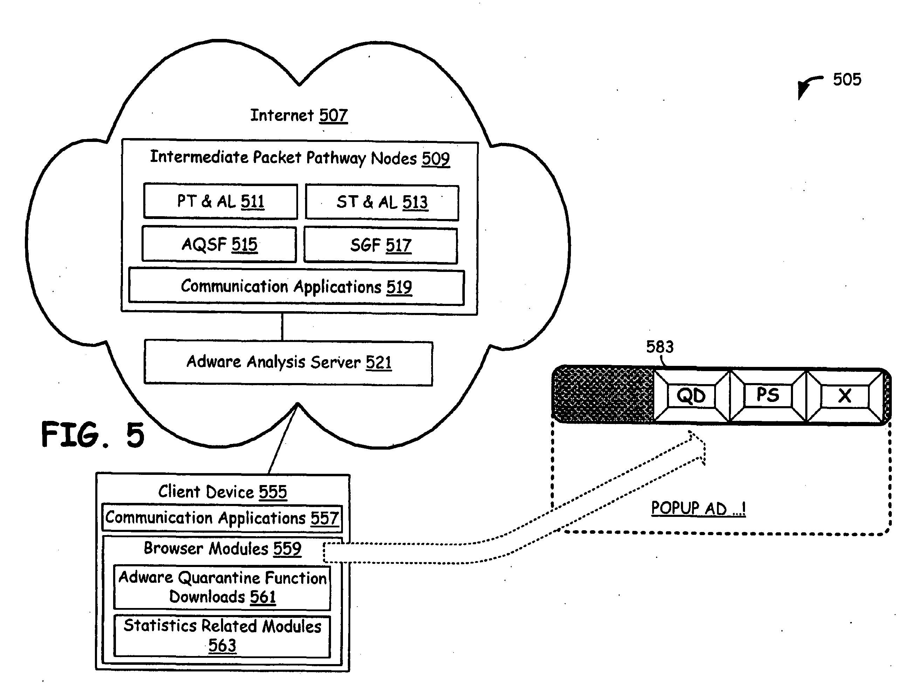

According to the present invention, the client device's operating system and/or the browser provide a provision for graceful closure of undesirable adware, when they occur, such as adware with frameless popup windows, adware windows containing fake buttons or adware with oversized windows. The operating system or the browser handles these situations created by the adware by utilizing the browser modules 159, which may simply be add-ons to the web browser. More detailed description of add-on provisions for the client device's users, such as graceful closure of undesirable adware or requesting for statistical data related to an adware or a server, can be found in description with reference to the **FIG. 5****.**

In another embodiment of the present invention, no adware is automatically presented by the browser of the client device 155, unless it is registered with the adware analysis server 121. In this approach, the adware analysis server 121 determines whether an adware is acceptable or not based on many of the above mentioned criteria, which may also include statistical analysis.

These intermediate nodes 109, to perform adware quarantine processing mentioned above, decrypt packets if they are encrypted, and may invoke a local or remote service for such a decryption process. The intermediate nodes 109 accomplish the adware quarantine processing in such a manner as to not repeat any of these processes along the communication path, that is, from the server 151 to the client device 155. This non-repetitive processing is done by including a comparison table version code in the packets, after the quarantine processing is done. The comparison table version code incorporates information about primary and secondary templates that are compared on the packet and the quarantine service functionality used on the packet by a previous node. Information contained in the comparison table version code may include the template version, associated logic version, local adware quarantine service function version, and the adware quarantine service functions applied locally or remotely. If any of the nodes in the communication path contains an enhanced or a recent version of templates, for example, the node may determine the need of comparison with only those enhanced templates. Similar considerations apply to associated logic and quarantine service functions.

If the comparison table version code does not exist in the packet, then the processing intermediate node determines that packet analysis has not taken place by any of the previous nodes. On the contrary, if the comparison table version code does exist, then the processing intermediate node decodes the code to determine the quarantine processes that have occurred before. Then, if any further quarantine processing is necessary only such processing are done. If the packets that arrive at a processing intermediate node are encrypted and if further analysis is indicated, then, network node proceeds with decryption of the packet. While the public key may be available either from the server 151 or from the client device 155, the private key is known only to the client device 155. Although, the description of (non-repetitive) quarantine processing shows one of the possible embodiments, it is not limited to the described embodiment alone.

**FIG. 2** is a schematic block diagram 205 illustrating functionality of communication applications distributed between a client device 255 and intermediate packet pathway nodes 209 of the communication infrastructure of **FIG. 1****,** according to the present invention. The client device 255 contains communication applications 257, that works in conjunction with communication applications 219 of the intermediate nodes 209, that exist in Internet backbone 207, to perform some of the adware quarantine status indications such as presenting messages relating to adware issues, gathering statistical information from the client device 255 and providing additional assistance to the client device 255. The client device 255 also consists of browser modules 259, which assists the browser with add-on functionalities. The browser modules 259 further consists of adware quarantine function downloads 261 and statistical related modules 263. Statistical related modules 263 perform to gather statistical information from the client device on their own, according to the adware related browser settings and pass them on to an adware analysis server 221. The intermediate nodes 209 further consists of components of the present invention, as described with reference to the **FIG. 1****,** such as PT & AL (Primary templates and Associated Logic) 211, ST & AL (Secondary Templates and Associated Logic) 213, AQSF (Adware Quarantine Service Functions) 215 and SGF (Statistics Gathering Modules) 217.

Gathering of statistical information may include a series of questions as indicated in 281. For example, it may contain a title such as "ADWARE WARNING!", "ADWARE MESSAGE!" or "ADWARE OPINION GATHERING!". It may provide a brief description of the nature of the contents of the adware message such as "Please take a few minutes to provide feedback regarding this pop-up adware, this helps us in quarantining undesirable adware/servers..." The questionnaire that follows may be of objective type so that the users are able quickly to provide their opinion. The questions may ask for user opinion on various aspects of the adware or the server that delivers such adware. These questions may only include aspects of the adware or the server that cannot be gathered by any other means, such as the ones that may be automatically gathered by the statistics related modules 263. For example, the questions may include adware related questions such as "Does this adware contain misleading buttons?", "Does this adware contain oversized frame?" , "Does this adware contain frameless window?", "Does this adware contain malware?" or "Is this popup required for the underlying page to function?" The communication applications 257 and 219 may also perform to present links that help users to fix adware related infections and may present statistical data regarding adware and/or the server upon user request. To ensure that only users of the client device 255 provide feedback and not any other software components, the communication applications 257 and 219 include a human challenge mechanism, such as the one shown in 281. Finally, the communication applications 257 and 219 may end the opinion gathering and the message presentation with a small message that informs the users about how the time spent in providing feedback helps the intermediate nodes 209 and the adware analysis server 221 in cleaning up the system of undesirable adware, such as the one shown in 283.

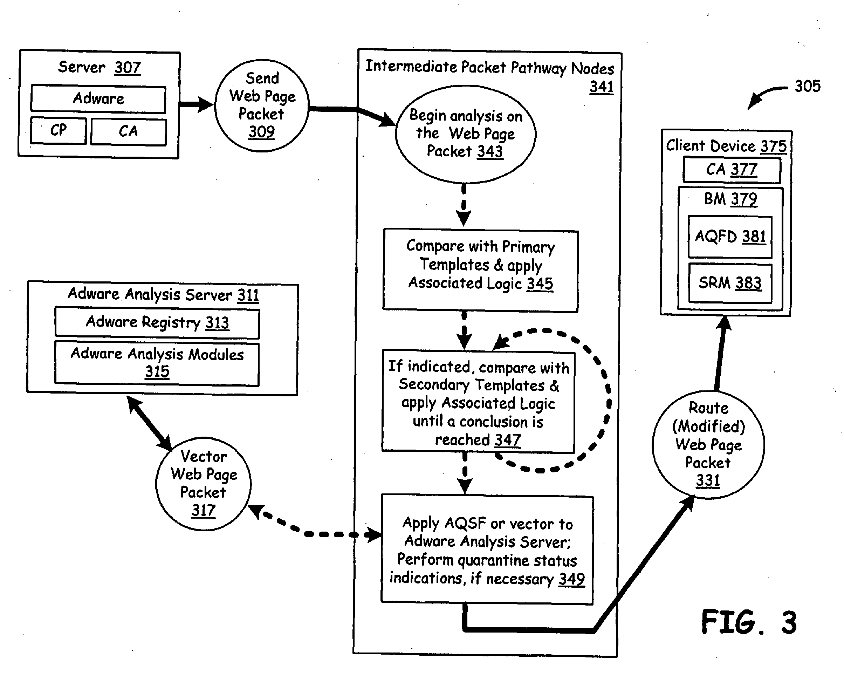

**FIG. 3** is a schematic block diagram illustrating interactions between the elements of the communication infrastructure of **FIG. 1****,** in accordance with the present invention. Specifically, the illustration shows interaction between elements of the communication infrastructure containing a plurality of intermediate packet pathway nodes (in short, intermediate nodes) 341, an adware analysis server 311, a server (source device) 307 and a client device 375. The server 307 contains software components such as communication pathway, adware, and communication applications. The client device 375 consists of communication applications 377 and browser modules 379. The browser modules 379 further consists of AQFD (Adware Quarantine Function Downloads) 381 and SRM (Statistics Related Modules) 383. In addition, the adware analysis server 311 contains adware registry 313 and adware analysis modules 315. The adware registry 313 may be a database table containing lists of servers, adware they source and the analyzed statistical data related to the servers and the adware.

The interaction begins by the server 307 sourcing a webpage packet 309 toward the intermediate nodes 341, destined toward the client device 375. The intermediate nodes 341, when the packet arrives, begin analysis 343 immediately. Initially, an attempt is made to identify if the arriving packet contains characteristics of an adware by comparing the packet header content and payload content with primary templates, and if any match occurs, corresponding associated logic are applied 345. If the logic associated with primary templates indicate, then the webpage packet is compared with secondary templates and the associated logic is applied 347. If the logic associated with the secondary templates indicates any further secondary template comparisons, such comparisons are made. This process of repeated comparisons with the secondary templates is continued until a conclusion regarding the adware characteristic in the webpage packet is reached 347.

Then, the intermediate nodes 341 apply adware quarantine service functions on the webpage packet 349. The adware quarantine service functions that are applied on the webpage packet are chosen based on the logic associated with the primary or the secondary templates. During the applications of adware quarantine service functions, the intermediate nodes also make an entry of the adware quarantine service functions that are applied in a table, which also contains an entry of quarantine status indications. The entry of quarantine status indications allow the communication applications to determine the messages that should be sent to the server and the client device and help determine the statistical data to be gathered, when an adware characteristic is found with the webpage packet. Then, the intermediate nodes 341 perform the quarantine status indications 349.

Alternatively, if the logic associated with the primary or secondary templates indicate that either partly or fully, the adware quarantine processing should be conducted at the adware analysis server 311, the webpage packet is sent to the adware analysis server 317. The adware analysis server 311 may perform all or some of the processing for adware such as detection of adware characteristics, determining the nature of the adware and performing communication application processes on the webpage packet, the server, and client device. Then, the webpage packet is routed 331 toward the client device 375, if indicated.

**FIG. 4** is a schematic block diagram 405 illustrating interactions between the communication applications 449, 477 incorporated into source 407 and client devices 475, and intermediate packet pathway nodes 441 in the communication infrastructure of FIG. 1, in accordance with the present invention. The intermediate nodes 441 begin analysis when a webpage packet is sent 409. Next, the received packet(s) of the webpage 443 are compared with primary and/or secondary templates and the associated logic are applied and quarantine status indications are performed 445. Alternatively, the packet(s) may be vectored to an adware analysis server for adware quarantine processing 445.

The interactions 447, 431 between the communication applications 449, 477 and the communication application of the server 407 occur based on the quarantine status indications. In accordance with the present invention, the browser, together with browser modules in client device (of FIG. 1), allow user to enter and save adware related browser settings 481. The adware related browser settings 481 allow communication applications present messages and statistical data, and gather statistical data based on user's preferences. The settings may include thresholds that indicate user's preferences in allowing a certain adware, such as disallow an adware if malware indication is above «w»%, number of respondents is above «x»%, adware dislike is above «y»%, server dislike is above <<z>>% or automatically present the adware if «g»% indicate the adware is necessary for the underlying webpage. The user may enter the exact values within « », in terms of percentage. The adware related browser settings 481 illustrate an example and in reality may not only be limited to the above mentioned thresholds.

The communication applications 449 and 477 perform together either to automatically present the statistical data regarding the server 407 and the adware or present upon a user's request. For example, the statistical data may be presented as: "Malware Indication: 73% (8,056 of 11,035 respondents opined this adware contains a malware), Threshold Setting: w%", or "Adware Dislike: 43% (4,799 of 11,035 respondents disliked this adware), Threshold Setting:
y%" as illustrated in 483. In addition, the communication applications 449 and 477 may also provide various statistical data regarding the server 407 such as: "Server (www.domainname.com) Dislike: 10% (11,104 of 111,031 respondents disliked this server), Threshold Setting: z%". Other user's opinions regarding the adware, that cannot be analyzed by the intermediate nodes, are also presented, such as: "Necessity of popup for the underlying webpage: 13% (13,141 of 101,081 respondents opined this adware is not necessary for the underlying webpage), Threshold Setting: g%". Similarly, the communication applications of the server 407 also works with communication application 449 to provide warning messages, statistical data to the server 407.

FIG. 5 is a schematic block 505 diagram illustrating functions of browser modules incorporated into the client devices. The client device 555 includes communication applications 557 and browser modules 559. The browser modules 559 further contains adware quarantine function downloads 561 and statistical related modules 563. Statistical related modules 563 perform to gather statistical information from the client device on their own, according to the adware related browser settings and pass them on to an adware analysis server 521. The intermediate nodes 509, that is part of an Internet backbone 507, consists of components of the present invention such as PT & AL (Primary templates and Associated Logic) 511, ST & AL (Secondary Templates and Associated Logic) 513, AQSF (Adware Quarantine Service Functions) 515 and SGF (Statistics Gathering Modules) 517. The intermediate nodes 509 further consist of communication applications 519.

The browser modules 559, which often are simply add-ons provided in the form of adware quarantine function downloads 561, by the intermediate nodes 509 or the adware analysis server 521. They provide additional means to the users of the client device 555 during Internet browsing, to overcome the negative affects of the undesirable adware. For example, an adware in the form of popup window 583 may present adware with frameless popup windows, adware windows containing fake buttons, adware with oversized windows or adware that infect the client device with spying software components. In one embodiment, as shown in 583, a popup window is shown having a plurality of buttons that allow user to control the adware affects. For example, the button QD (Quarantine Downloads) may allow user to download a plurality of adware quarantine function downloads 561, depending upon any specific request. The button PS (Provide Statistics) may allow user to download statistical data regarding the adware and the server, as described with reference to the **FIG. 4****.** The button X (exit) may allow user to close the popup window without allowing the popup window to infect the client device 555. In another embodiment, the browser modules may provide these additional controls over the adware to the user in the form of a separate popup adware control window (not shown) containing a plurality of buttons, such as QD, PS or X. Such windows may be useful when adware popup windows are oversized, frameless, or flying popup windows.

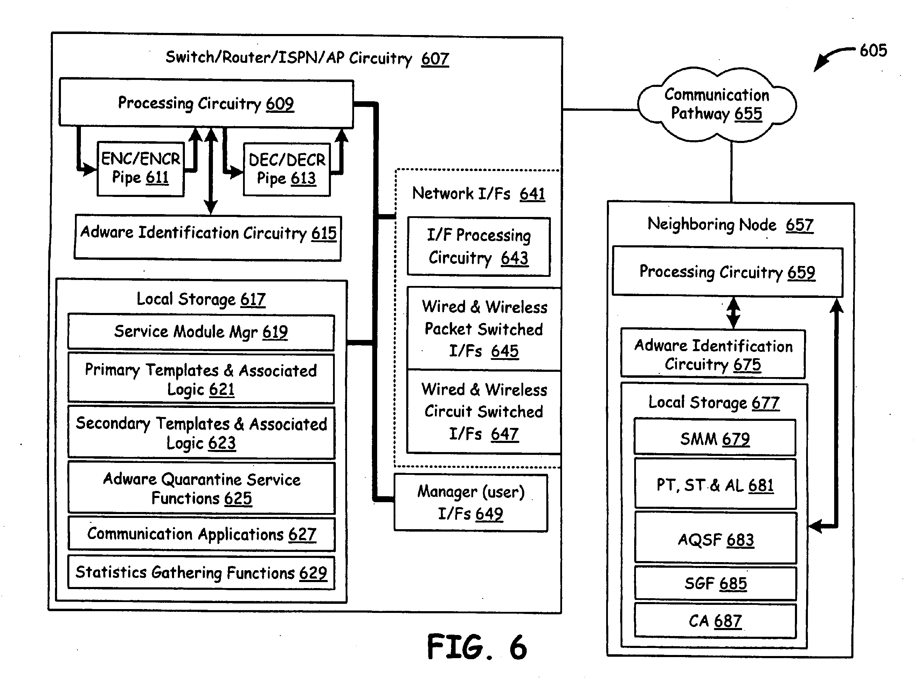

**FIG. 6** is a schematic block diagram illustrating a network node (switch/router/ISPN/AP) 607 constructed in accordance with the embodiment of **FIG. 1** of the present invention. The illustration shows a communication pathway 655 that communicatively couples the network node 607 to a neighboring node 657, which has similar adware quarantine processing capabilities. The network node circuitry 607 may represent any of the Internet nodes that route data packets and the circuitry may in part or full be incorporated in any of the network devices such as a switch, router, ISPN device, or access point. The network node circuitry 607 generally includes processing circuitry 609, local storage 617, manager interfaces 649, and network interfaces 641. These components communicatively coupled to one another via one or more of a system bus, dedicated communication pathways, or other direct or indirect communication pathways. The processing circuitry 609 may be, in various embodiments, a microprocessor, a digital signal processor, a state machine, an application specific integrated circuit, a field programming gate array, or other processing circuitry. The processing circuitry 609 is communicatively coupled to an encoding/encryption pipe 611, a decoding/decryption pipe 613 and adware identification circuitry 415. These hardware components 611, 613 and 615 may be hardwired to increase the speed of adware quarantine processing and routing.

Local storage 617 may be random access memory, read-only memory, flash memory, a disk drive, an optical drive, or another type of memory that is operable to store computer instructions and data. The local storage 617 contains Service Module Manager (SMM) 619 that analyses incoming packets by comparing the header contents and payload contents with appropriate templates. These templates and associated logic include primary templates and associated logic 621 and secondary templates and associated logic 623. If any match is found during the primary template comparison, the associated logic 621 directs the packets to selected groups of secondary templates 623 for further analysis and after secondary template comparison, the logic associated with secondary templates is applied. This process is repeated until a conclusion is reached. Then, appropriate adware quarantine service functions 625 or remote quarantine service functions (such as AQSF 683) are applied. The communication applications 627 allow messages and statistical data gathering screens with human challenge to be presented on the screen, such as a popup, with or without a browser. The local storage 617 also contains statistics gathering functions 629. They work in conjunction with statistics related modules of client devices to gather statistical data regarding an adware or a server, from which the adware originated. The statistical data collected represents malware and adware indications determined and also servers indicated as disliked by the users. The statistics gathering functions 629 perform automatically, as per user setting at the client device, to gather and store statistical data at the network node 607.

The network interfaces 641 contain wired and wireless packet switched interfaces 645, wired and wireless circuit switched interfaces 647. The network interfaces 641 may also contain built-in or an independent interface processing circuitry 643. The network interfaces 641 allow network devices to communicate with other network devices and allow processing circuitry 609 to receive and send packets, which may contain adware code segments. The network interfaces 641 allow utilization of external adware quarantine service functions for analysis and processing when such functions are not available in the local storage 617. The manager interfaces 649 may include a display and keypad interfaces. These manager interfaces 649 allow the user at the network exchanges to control aspects of the present invention, such as aspects of statistical data gathering, adware quarantine service function aspects, aspects of primary and secondary templates and associated logic etc.

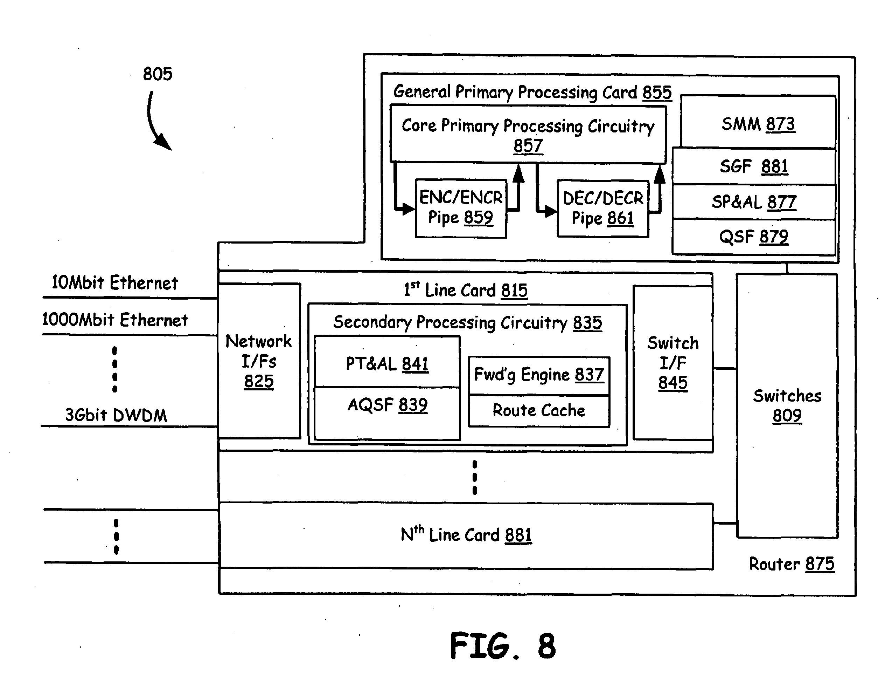

In other embodiments, the network node 607 of the present invention may include fewer or more components than are illustrated as well as lesser or further functionality. In other words, the illustrated network device is meant merely to offer one example of possible functionality and construction in accordance with the present invention. Another possible embodiment of network nodes is described with reference to the **FIG. 8****.**

The network node 607 is communicatively coupled to external network devices, such as neighboring node 657 or external adware analysis servers (not shown), via communication pathway 655. The neighboring node 657 may also contain elements of present invention such as a processing circuitry 659, local storage 677, and adware identification circuitry 675. The local storage 677 further contains SMM (Service Module Manager) 679, PT, ST & AL (Primary Templates, Secondary Templates and Associated Logic) 681, AQSF (Adware Quarantine Service Functions) 683, SGF (Statistics Gathering Functions) 685 and CA (Communication Applications) 687. The neighboring node 657 may have other components of the network node 607 such as an encryption pipe and decryption pipe (not shown).

The network node 607 begins analysis by comparing the packet contents (header and payload) with a plurality of primary templates. By such primary template comparisons, the node 607 determines whether the packet contains adware. When a match occurs, the node 607 applies logic associated with the primary templates. This, in turn, may lead to secondary template comparisons, where the packet header and payload contents are compared with a selected group of secondary templates. Then, the logic associated with secondary templates is applied. The process of secondary template comparisons and applying associated logic is repeated until a conclusion regarding adware characteristic is arrived. Once an adware characteristic is confirmed, the adware quarantine processing begins. Here, the adware quarantine service functions are applied on the packet, by utilizing locally available adware quarantine service functions 625 or externally available AQSFs such as the AQSF 683, by vectoring the packet to the neighboring node 667.

Statistical data are gathered by using the statistics gathering functions 629, as a part of the adware quarantine processing, regarding each adware sent by a server and the server, and such data are utilized for determining quarantine status indications. When an adware appears on a client device's browser, the user opinion regarding that adware and the server is collected by using statistics gathering functions. Such collected statistical data is analyzed and utilized in course of actions in the quarantine status indications, at present as well as in the future.

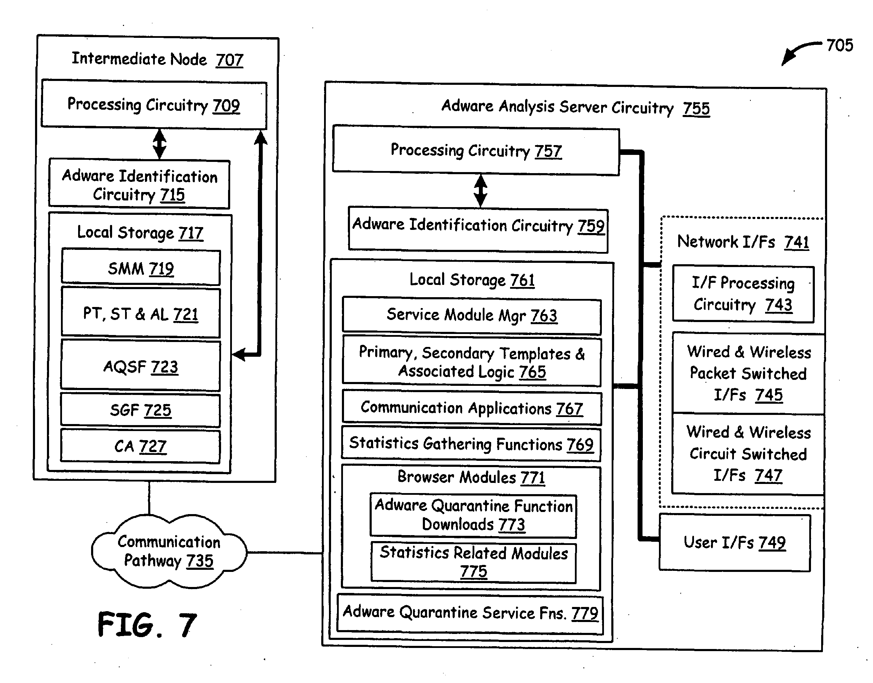

FIG. 7 is a schematic block diagram 705 illustrating an adware analysis circuitry 755 constructed in accordance with the embodiment of **FIG. 1** of the present invention. The adware analysis server circuitry 755 performs some or all of the adware quarantine processing such as detection of adware characteristics in packets, determining the nature of the adware, performing communication application processes on the webpage packet, the server and client device, and gathering and analyzing statistical data regarding a plurality of adware and servers. The adware analysis server circuitry 755 generally includes processing circuitry 757, local storage 761, user interfaces 749, and network interfaces 741. These components communicatively coupled to one another via one or more of a system bus, dedicated communication pathways, or other direct or indirect communication pathways. The processing circuitry 757 may be, in various embodiments, a microprocessor, a digital signal processor, a state machine, an application specific integrated circuit, a field programming gate array, or other processing circuitry. The processing circuitry 757 is communicatively coupled to an adware identification circuitry 759.

Local storage 761 may be random access memory, read-only memory, flash memory, a disk drive, an optical drive, or another type of memory that is operable to store computer instructions and data. The local storage 761 contains elements of the present invention such as a service module manager 763, primary, secondary templates and associated logic 765, communication applications 767, statistics gathering functions 769, browser modules 771, and an adware service quarantine functions 779. The browser modules 771 further contains adware quarantine function downloads 773 and statistics related modules 775.

The adware detection and adware quarantine processing performed by the adware analysis server circuitry 755 is similar to that of a network node described with reference to the FIG. 6 and begins with packet contents being compared with primary templates. If any match is found during the primary template comparison, the associated logic directs the packets to selected groups of secondary templates for further analysis and after secondary template comparison, the logic associated with secondary templates is applied. This process is repeated until a conclusion is reached. Then, appropriate adware quarantine service functions 779 are applied. Once an adware characteristic is confirmed, the adware quarantine processing begins. Here, the adware quarantine service functions are applied on the packet, by utilizing locally available adware quarantine service functions 779. The communication applications 767 allow messages and statistical data gathering screens with human challenge to be presented on the screen, such as a popup, with or without a browser. The statistics gathering functions 769 work in conjunction with statistics related modules of client devices to gather statistical data regarding an adware or a server, from which the adware originated. The statistical data collected represents malware and adware indications as well as adware and servers disliked by the users. The statistics gathering functions 769 perform automatically, as per user setting at the client device, to gather and store statistical data. The statistics related modules 775 and adware quarantine function modules 773 are stored in memory for downloading into client devices upon request.

The network interfaces 741 contain wired and wireless packet switched interfaces 745, wired and wireless circuit switched interfaces 747. In addition, the network interfaces 741 may also contain built-in or an independent interface processing circuitry 743. The network interfaces 741 allow network devices to communicate with other network devices, servers and client devices. The user interfaces 749 may include a display and keypad interfaces. These user interfaces 749 allow the user to control aspects of the present invention at the adware analysis server 755, such as aspects of manual/automatic/semiautomatic statistical data gathering and analysis, adware quarantine service function aspects, aspects of primary and secondary templates and associated logic etc.

In other embodiments, the adware analysis server circuitry 755 of the present invention may include fewer or more components than are illustrated as well as lesser or further functionality. In other words, the illustrated adware analysis server circuitry 755 is meant to merely offer one example of possible functionality and construction in accordance with the present invention.

The adware analysis server circuitry 755 is communicatively coupled to external network devices, such as an intermediate node 707 via a communication pathway 735. The intermediate node 707 contains a processing circuitry 709, local storage 717, and adware identification circuitry 715. The local storage 717 further contains SMM (Service Module Manager) 719, PT, ST & AL (Primary Templates, Secondary Templates and Associated Logic) 721, AQSF (Adware Quarantine Service Functions) 723, SGF (Statistics Gathering Functions) 725 and CA (Communication Applications) 727. The intermediate node 707 may have other components such as an encryption pipe and decryption pipe (not shown).

The adware analysis server circuitry 755 gathers statistical data by utilizing the statistics gathering functions 769, either automatically or semi-automatically (that is, with some assistance from the users), by working with the statistics related modules (shown in **FIG. 1**) of the client devices. Statistical data is also gathered by working with network nodes such as 707, or via user interaction at the client device, as described with reference to the **FIG. 2****.** That is, when an adware appears on a client device's browser, the user opinion regarding that adware and the server is collected by using statistics gathering functions 769. Such collected statistical data is analyzed and utilized in course of actions in the quarantine status indications, at present as well as in the future.

The adware analysis server 755 has three primary functions: (a) gathering statistics, as mentioned above; (b) providing secondary templates and logic to complete identification; and (c) generate and distribute templates and logic to the intermediate nodes, based on gathered and analyzed statistical data wherein the generation is done either manually, fully automatic, or automatic with manual confirmation and editing. Automatic generation of templates and logic is done by the communication applications (that participate in the statistical data gathering process by interacting with an end user), such as 727, delivering the interaction information (statistical data) to the adware analysis server 755. That is, based on the interaction information from many end users, the adware analysis server 755 determines that a server or served packets justify special handling and creates templates and logic based thereon. Such creation involves template construction from, for example, any one or more of (a) source or destination IP addresses equaling that of the server; (b) domain name equaling that of the server; (c) identifying content signatures; and (d) path matches. The created templates and logic is then distributed to the intermediate nodes.

**FIG. 8** is a schematic block diagram 805 illustrating a router 875 constructed in accordance with the embodiment of **FIG. 1** of the present invention. The router 875 may be a packet switching exchange or an access point. The router circuitry 875 generally includes general primary processing card 855, switches 809, and plurality of line cards 815 and 881. The line cards 815 and 881 may all be different in certain cases.

The first line card 815 consists of network interfaces 825 capable of interfacing with wired and wireless networks such as 10Mbit, 1000Mbit Ethernet networks, and 5Gbit DWDM (Dense Wavelength Division Multiplexing) fiber optic networks. The first line card 815 also contains switch interfaces 845 that allow the card to interface with interconnecting switches 809. The first line card 815 consists of secondary processing circuitry 835, which preprocesses the packets for adware before interconnecting switches 809 route the packets. The secondary processing circuitry 835 contains forwarding engine 837 and route cache. The secondary processing circuitry 835, in addition to preprocessing the packets, also contains PT & AL (Primary Templates and Associated Logic) 841. The incoming packets are initially compared with primary templates and associated logic is applied. If a match occurs, adware quarantine service functions 839 locally available are used to preprocess the packets.

The general primary processing card 855 further consists of core primary processing circuitry 857, which is communicatively coupled to an encoding/encryption pipe 859 and a decoding/decryption pipe 861. The general primary processing card 855 also contains service module manager (SMM) 873, SP & AL (Supplementary Templates and Associated Logic) 877, SGF (Statistics Gathering Functions) 881 and QSF (Quarantine Service Functions) 879. The SMM 873 in conjunction with SP & AL 877 and QSF 879 perform secondary quarantine analysis and processing, if vectored by the first line card 815.

The SMM 873 performs adware detection and processing functions by comparing the incoming packet payloads with SP & AL 877 and applying appropriate quarantine service functions 879 indicated in the logic of the supplementary templates. The quarantine service function processing involves, upon detection of an adware, sending messages (or gathering statistical data) with a human challenge, to the respective end point devices.

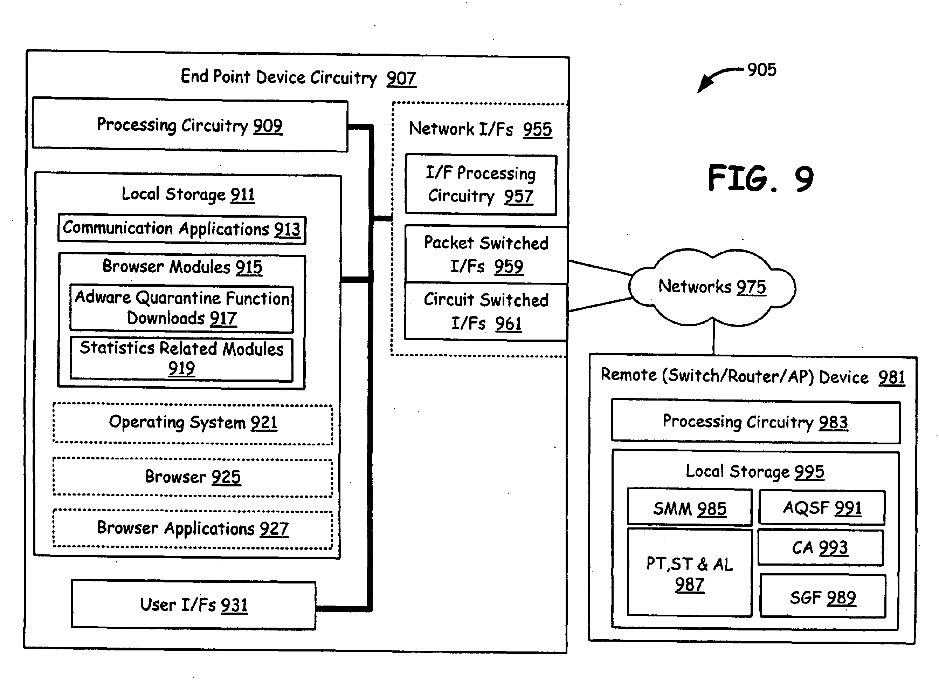

**FIG. 9** is a schematic block diagram 905 illustrating end point devices (source and/or client devices) 907 constructed in accordance with the embodiments of **FIG. 1** of the present invention. The end point device circuitry 907 may refer to any of the device circuitry from which packets that may contain adware code segments, originate and/or terminate, and the circuitry may in part or full be incorporated in any of the end point devices (server and client device) described with reference to the **FIG. 1****.** The end point device circuitry 907 generally includes processing circuitry 909, local storage 911, user interfaces 931, and network interfaces 955. These components communicatively coupled to one another via one or more of a system bus, dedicated communication pathways, or other direct or indirect communication pathways. The processing circuitry 909 may be, in various embodiments, a microprocessor, a digital signal processor, a state machine, an application specific integrated circuit, a field programming gate array, or other processing circuitry.

The network interfaces 955 may contain wired and wireless packet switched interfaces 959, wired and wireless circuit switched interfaces 961 and the network interfaces 955 may also contain built-in or an independent interface processing circuitry 957. The network interfaces 955 allow end point devices to communicate with any other end point devices. The user interfaces 931 may include a display and keypad interfaces.

Local storage 911 may be random access memory, read-only memory, flash memory, a disk drive, an optical drive, or another type of memory that is operable to store computer instructions and data. The local storage 911 includes communication applications 913 and browser modules 915. The browser modules 915 further contain adware quarantine function downloads 917 and statistics related modules 919. The local storage 911 may contain browser applications 927, and an operating system 921 and browser 925. The browser applications 927 are capable of executing or interpreting downloaded adware quarantine function downloads 917 that help educate the users about adware and fix adware related problems. These downloads 917 may be made available by the network nodes when they detect a adware code segment in a packet that either originate or destined to the end point device circuitry 907, or upon request. The communication applications 913 allow messages and human challenge to be displayed on the screen and gather statistical data regarding adware and servers, such as a popup, with or without a browser.

In other embodiments, the end point device circuitry 907 of the present invention may include fewer or more components than are illustrated as well as lesser or further functionality, and may adapt to the data packets exchange functionality rather than voice packets exchange. In other words, the illustrated end point device is meant merely to offer one example of possible functionality and construction in accordance with the present invention.

The end point device 907 is communicatively coupled to external network devices, such as remote device 981, via networks 975. The external network device 981 may also consist of elements of present invention such as processing circuitry 983 and local storage 995 (including SMM 985 and PT, ST & AL 987, AQSF 991, CA 993 and SGF 989) among other functional blocks of the present invention. The server or client devices typically communicate with each other by exchanging packets. These packets may contain adware code segments. When a network node, such as remote device 981 detects adware it takes one of many possible steps. These steps may include altering or dropping the packet, sending appropriate warning, information or assistance related messages and statistical data gathering messages to the end point devices with a challenge mechanism for the users and providing assistance to the end point devices to fix the adware related issues. These functionalities are achieved by remote device 981 components 985, 987, 989, 991, and 993 working together with end point device circuitry 907 components 913, 915, 917, 919, and 927.

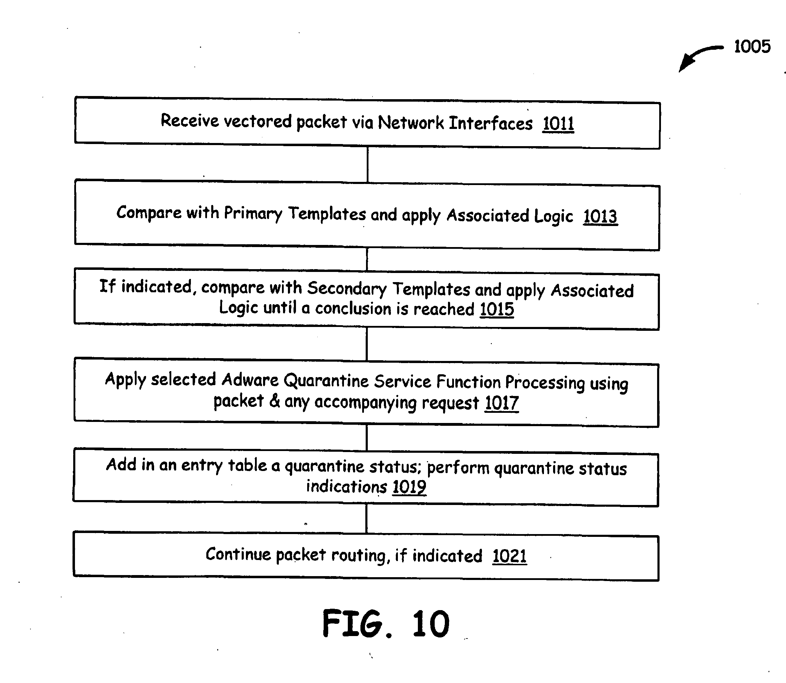

**FIG. 10** is a flowchart 1005 illustrating general flow of functionality of intermediate packet pathway node of **FIG. 1****.** The intermediate node identifies an adware characteristic in the packet by comparing with primary and/or secondary templates and applying logic associated with them. The flow of functionality of an intermediate node begins when the intermediate node receives a vectored packet via network interfaces, at a block 1011. At a next block 1013, the intermediate node compares the packet with primary templates and if a match is found, applies associated logic. If the associated logic indicates, at a next block 1015, the intermediate node compares the packet with a selected group of secondary templates and applies associated logic. This process of comparing with secondary templates and applying associated logic is continued until a conclusion regarding adware is reached.

At a next block 1017, after identification of the adware characteristic and in response to the application of associated logic, the intermediate node processes the packet containing adware by applying selected adware quarantine service functions. At a next block 1019, the intermediate node makes an entry of source device address, client device address and actions to be performed (that is, quarantine status indications) on the end point devices and the packet. The intermediate node follows up and performs quarantine status indications. Communication applications incorporated into the intermediate node (and end point devices) help implement some of the quarantine status indications by coordinating communications between end point devices and the intermediate nodes, and allow displaying of messages, gathering statistics (with human challenge mechanisms). At a next block 1021, the intermediate node continues routing the packet, if indicated in the quarantine status indications.

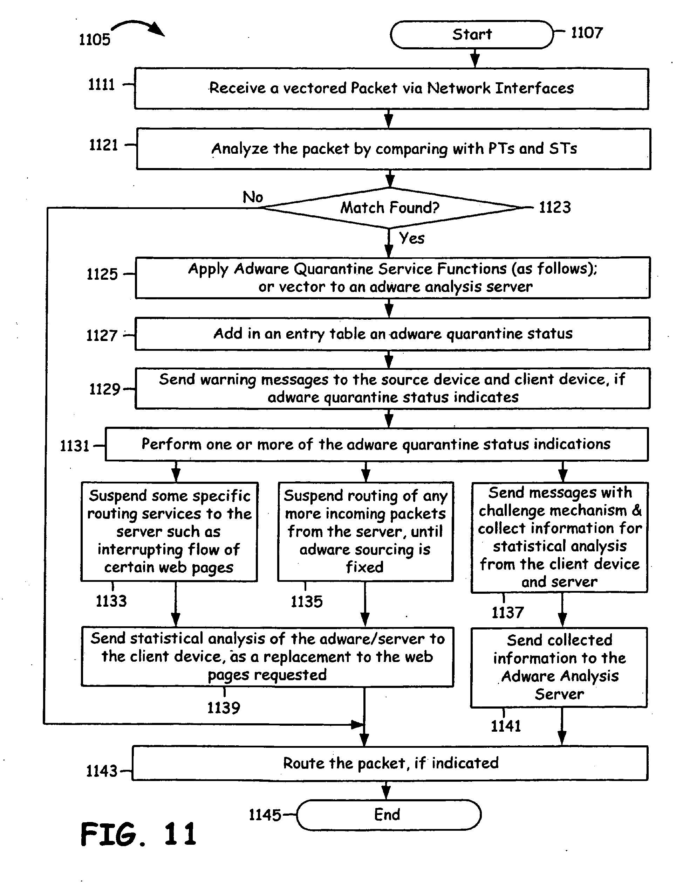

**FIG. 11** is a flowchart 1105 illustrating functionality of intermediate packet pathway node of **FIG.1****,** in detail. The functionality of the intermediate node begins at a start block 1107 and continues to a next block 1111 where the intermediate node receives a vectored packet via network interfaces. At a next block 1121, the intermediate node compares the packet with primary templates and if a match is found, applies associated logic. If the associated logic indicates, the intermediate node compares the packet with a selected group of secondary templates and applies associated logic. This process of comparing with secondary templates and applying associated logic is continued until a conclusion regarding adware is reached.

At a next decision block 1123, the intermediate node determines if an adware characteristic is found (that is, a match during comparisons) in the packet. If not, the packet is routed toward the client device, at a block 1143. The functionality of intermediate node ends at a next end block 1145. If a match is found, at a next block 1125, the intermediate node begins to apply adware quarantine service functions, or vectors the packet to an adware analysis server. At a next block 1127, the server and client device addresses and adware quarantine status are entered in an entry table, as a part of adware quarantine processing. The entry table is a database table containing addresses, pathways, and adware quarantine status. Entry in to this database table is done as a part of adware quarantine processing. Adware quarantine status indications tell the intermediate nodes and the adware analysis server the actions to be performed and actions that are performed on the server (such as messages sent and statistics gathered), client device, and the packets (adware), and helps monitor the server adware related activities.

At a next block 1129, the intermediate node sends messages to the source device and client device, if adware quarantine status indicates. At a next block 1131, the intermediate node performs one or more of the adware quarantine status indications mentioned in blocks 1133, 1135, 1137, 1139 and/or 1141. At the block 1133, the intermediate node performs adware quarantine status indications by suspending some specific routing services to the server, such as interrupting flow of certain web pages containing undesirable adware. Then at the next block 1139, the intermediate node sends statistical analysis related to the adware and/or the server to the client device as a replacement webpage. At the block 1135, the intermediate node performs adware quarantine status indications by suspending routing of any more packets coming from the server, until unwanted adware sourcing is fixed. Then at the next block 1139, the intermediate node sends statistical analysis related to the adware and/or the server to the client device as a replacement webpage. At the block 1137, the intermediate node performs adware quarantine status indications by sending messages with challenge mechanism to the client device and collects information for statistical analysis from the users of the client device (and the server). At the next block 1137, the intermediate node sends collected statistical data regarding the server and the adware to the adware analysis server. The actions of blocks 1133, 1135, 1137, 1139, and/or 1141 may also depend on the adware related browser settings at the client device. The intermediate node routes the packet toward the client device, at the next block 1143. The detailed functionality of intermediate node ends at the next end block 1145.

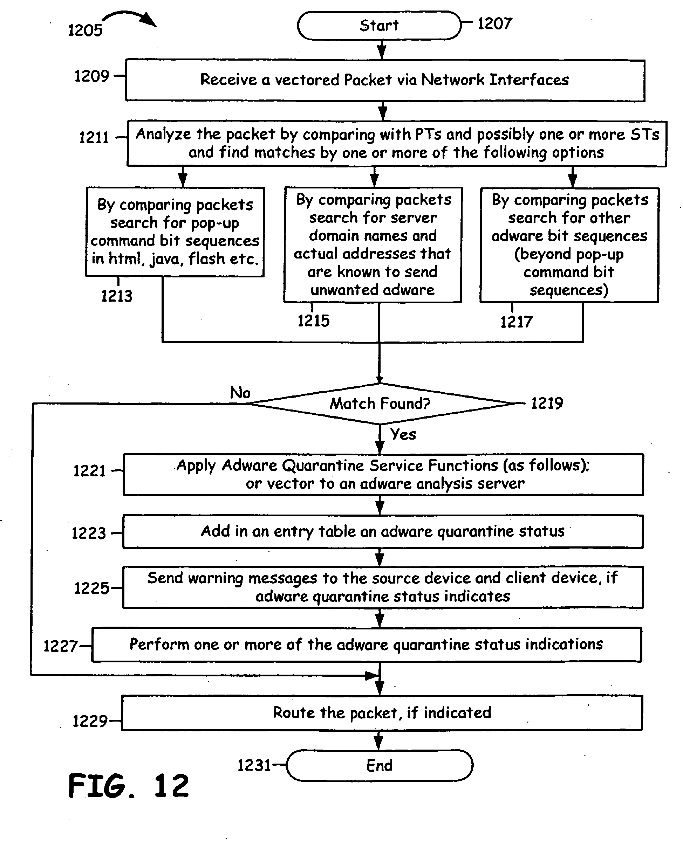

**FIG. 12** is a flowchart 1205 illustrating adware identification and processing functionality of intermediate packet pathway node of **FIG. 1**, in detail. The functionality of the intermediate node begins at a start block 1207 and at a next block 1209, the intermediate node receives a vectored packet via network interfaces. At a next block 1211, the intermediate node analyzes the packet by comparing the packet with primary templates and if a match is found, applies associated logic. If the associated logic indicates, the intermediate node compares the packet with a selected group of secondary templates and applies associated logic. This process of comparing with secondary templates and applying associated logic is continued until a conclusion regarding adware is reached. For the analysis, the intermediate node may compare the packet with primary and secondary templates, to perform one or more of the actions of blocks 1213, 121.5 and/or 1217. At the block 1213, the intermediate node searches for a pop-up command bit sequences in html, java, flash etc., by comparing with primary and secondary templates. At the block 1215, the intermediate node searches for server domain name and actual address that are known to send unwanted adware, by comparing with primary and secondary templates. At the block 1217, the intermediate node searches for other adware bit sequences (beyond pop-up command bit sequences), by comparing with primary and secondary templates.

At a next decision block 1219, the intermediate node determines if an adware characteristic is found (that is, a match during comparisons) in the packet. If not, the packet is routed toward the client device, at a block 1229. The functionality of intermediate node ends at a next end block 1231. If a match is found, at a next block 1221, the intermediate node begins to apply adware quarantine service functions or vectors the packet to an adware analysis server. At a next block 1223, the server and client device addresses and adware quarantine status are entered in an entry table, as a part of adware quarantine processing. At a next block 1225, the intermediate node sends messages to the source device and client device, if adware quarantine status indicates. At a next block 1227, the intermediate node performs the adware quarantine status indications. The intermediate node routes the packet toward the client device, at the next block 1229. The detailed functionality of intermediate node ends at the next end block 1231.

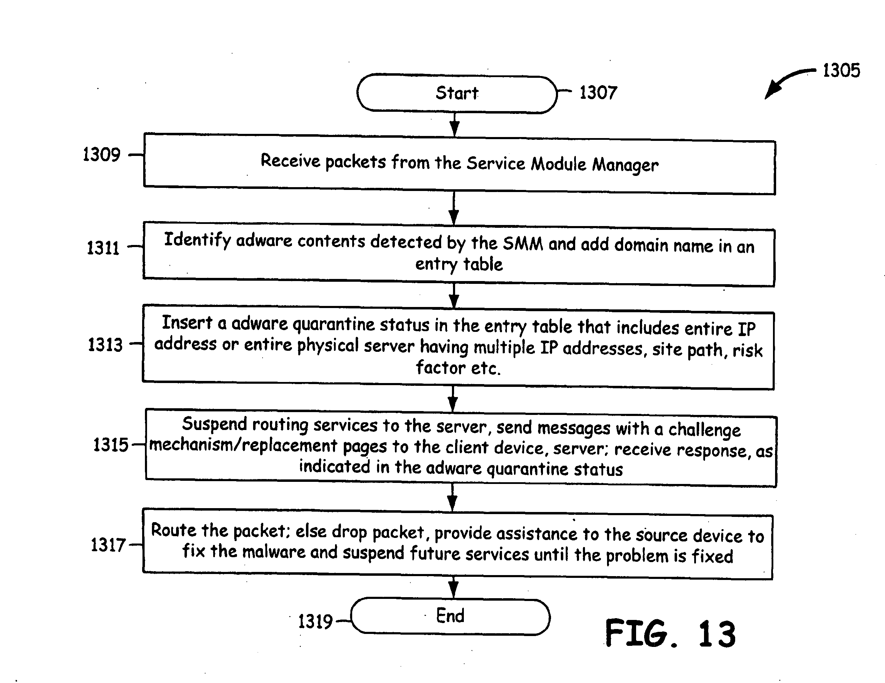

**FIG. 13** is a flowchart illustrating functionality of adware identification circuitry, in devices of **FIGs. 6** and **7****.** The functionality of the adware identification circuitry begins at a start block 1307. At a next block 1309, the adware identification circuitry receives packets from the service module manager. At a next block 1311, the adware identification circuitry identifies undesirable adware detected by the service module manager and adds the corresponding domain name in an entry table. At a next block 1313, the adware identification circuitry inserts adware quarantine status in the entry table that may include entire IP address or entire physical server having multiple IP addresses, site path, and risk factor among other entries.

Then, at a next block 1315, the adware identification circuitry suspends routing services to the router, sends warning messages with a challenge for the user and replacement web pages to the source device, and receives response with statistical information, if such an actions are indicated in the adware quarantine status. At a next block 1317, the adware identification circuitry forwards packet to another unit for routing. If further routing is not indicated, the adware identification circuitry drops the packet, provides assistance to the source device to fix adware related problems, and interrupts further routing of packets from the source address until the problem is fixed. The functionality ends at a next block 1319.

As one of average skill in the art will appreciate, the term "communicatively coupled", as may be used herein, includes wireless and wired, direct coupling and indirect coupling via another component, element, circuit, or module. As one of average skill in the art will also appreciate, inferred coupling (i.e., where one element is coupled to another element by inference) includes wireless and wired, direct and indirect coupling between two elements in the same manner as "communicatively coupled".

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the scope of the invention, as limited only by the scope of the appended claims.

## Claims

1. A communication system (105) comprising:
a client device (155, 255, 375, 475, 555, 907) configured to execute a web browsing software;
a server device (151, 307, 407, 907); and
an Internet network comprising multiple intermediate routing nodes (109, 209, 341, 441, 509, 607, 657, 707, 875), each intermediate routing node configured to receive a plurality of packets from the server device destined for the web browsing software of the client device, compare each of the plurality of packets received to a plurality of predefined templates, each of the plurality of predefined templates relating to adware, and after identifying a successful comparison, communicate with the web browsing software to perform a quarantine function and incorporate information about the plurality of predefined templates in each packet of the plurality of packets for avoiding repetition of the same quarantine function at further intermediate routing nodes along a path towards the client device.

2. The communication system of claim 1, wherein each intermediate routing node is further configured to select the quarantine function based upon characteristics of the adware identified through the successful comparison.

3. The communication system of claim 1, wherein each intermediate routing node is further configured to communicate with the web browsing software to present a human challenge.

4. The communication system of claim 1, wherein each intermediate routing node, after identifying the successful comparison, is further configured to interact with the server device regarding the successful comparison.

5. Circuitry for use in an intermediate routing node for use in an Internet network comprising a plurality of intermediate routing nodes (109, 209, 341, 441, 509, 607, 657, 707, 875) each configured to receive a plurality of packets from a server device (151, 307, 407, 907) destined for a web browsing software of a client device (155, 255, 375, 475, 555, 907)
wherein the circuitry is configured to:
compare each of the plurality of packets received to a plurality of predefined templates, each of the plurality of predefined templates relating to adware, and after identifying a successful comparison, communicate with the web browsing software to perform a quarantine function and incorporate information about the plurality of predefined templates in each packet of the plurality of packets for avoiding repetition of the same quarantine function at further intermediate routing nodes along a path towards the client device.

6. The network node circuitry of claim 5, wherein the adware processing functionality is configured to interrupt delivery of the packet to the destination device.

7. A method for use in an intermediate routing node for use in an Internet network comprising a plurality of intermediate routing nodes (109, 209, 341, 441, 509, 607, 657, 707, 875) each configured to receive a plurality of packets from a server device (151, 307, 407, 907) destined for a web browsing software of a client device (155, 255, 375, 475, 555, 907),
wherein the method comprises:
comparing each of the plurality of packets received to a plurality of predefined templates, each of the plurality of predefined templates relating to adware,
after identifying a successful comparison, communicating with the web browsing software to perform a quarantine function and incorporating information about the plurality of predefined templates in each packet of the plurality of packets for avoiding repetition of the same quarantine function at further intermediate routing nodes along a path towards the client device.

## Patentansprüche

1. Kommunikationssystem (105) mit:
- einer Client-Einrichtung (155, 255, 375, 475, 555, 907), die dafür konfiguriert ist, eine Web-Browsing-Software auszuführen,
- einer Server-Einrichtung (151, 307, 407, 907), und
- einem Internet-Netzwerk, das mehrere Zwischen-Routing-Knoten (109, 209, 341, 441, 509, 607, 657, 707, 875) umfasst, wobei jeder Zwischen-Routing-Knoten dafür konfiguriert ist, von der Server-Einrichtung eine Mehrzahl für die Web-Browsing-Software der Client-Einrichtung bestimmter Pakete zu empfangen, jedes der Mehrzahl empfangener Pakete mit einer Mehrzahl vordefinierter Templates zu vergleichen, wobei jedes der Mehrzahl vordefinierter Templates Adware betrifft, und nach dem Ermitteln eines erfolgreichen Vergleichs mit der Web-Browsing-Software zu kommunizieren, um eine Quarantänefunktion durchzuführen, und Informationen über die Mehrzahl vordefinierter Templates in jedes Paket der Mehrzahl Pakete einzufügen, um eine Wiederholung derselben Quarantänefunktion an weiteren Zwischen-Routing-Knoten längs eines Pfades zur Client-Einrichtung zu vermeiden.

2. Kommunikationssystem nach Anspruch 1,
bei dem jeder Zwischen-Routing-Knoten ferner dafür konfiguriert ist, basierend auf Charakteristika der durch den erfolgreichen Vergleich ermittelten Adware, die Quarantänefunktion auszuwählen.

3. Kommunikationssystem nach Anspruch 1,
bei dem jeder Zwischen-Routing-Knoten ferner dafür konfiguriert ist, mit der Web-Browsing-Software zu kommunizieren, um eine menschliche Herausforderung zu präsentieren.

4. Kommunikationssystem nach Anspruch 1,
bei dem jeder Zwischen-Routing-Knoten ferner dafür konfiguriert ist, nach dem Ermitteln des erfolgreichen Vergleichs mit der Server-Einrichtung hinsichtlich des erfolgreichen Vergleichs zu interagieren.

5. Schaltung zur Verwendung in einem Zwischen-Routing-Knoten zur Verwendung in einem Internet-Netzwerk, das eine Mehrzahl Zwischen-Routing-Knoten (109, 209, 341, 441, 509, 607, 657, 707, 875) umfasst, von denen jeder dafür konfiguriert ist, von einer Server-Einrichtung (151, 307, 407, 907) eine Mehrzahl für eine Web-Browsing-Software einer Client-Einrichtung (155, 255, 375, 475, 555, 907) bestimmter Pakete zu empfangen,
- wobei die Schaltung dafür konfiguriert ist:
jedes der Mehrzahl empfangener Pakete mit einer Mehrzahl vordefinierter Templates zu vergleichen, wobei jedes der Mehrzahl vordefinierter Templates Adware betrifft, und nach dem Ermitteln eines erfolgreichen Vergleichs mit der Web-Browsing-Software zu kommunizieren, um eine Quarantänefunktion durchzuführen, und Informationen über die Mehrzahl vordefinierter Templates in jedes Paket der Mehrzahl Pakete einzufügen, um eine Wiederholung derselben Quarantänefunktion an weiteren Zwischen-Routing-Knoten längs eines Pfades zur Client-Einrichtung zu vermeiden.

6. Netzwerkknotenschaltung nach Anspruch 5,
bei der die Adware-Verarbeitungsfunktionalität dafür konfiguriert ist, die Lieferung der Pakete an die Zieleinrichtung zu unterbrechen.

7. Verfahren zur Verwendung in einem Zwischen-Routing-Knoten zur Verwendung in einem Internet-Netzwerk, das eine Mehrzahl Zwischen-Routing-Knoten (109, 209, 341, 441, 509, 607, 657, 707, 875) umfasst, von denen jeder dafür konfiguriert ist, von einer Server-Einrichtung (151, 307, 407, 907) eine Mehrzahl für eine Web-Browsing-Software einer Client-Einrichtung (155, 255, 375, 475, 555, 907) bestimmter Pakete zu empfangen,
- wobei das Verfahren umfasst:
- Vergleichen jedes der Mehrzahl empfangener Pakete mit einer Mehrzahl vordefinierter Templates, wobei jedes der Mehrzahl vordefinierter Templates Adware betrifft,
- nach dem Ermitteln eines erfolgreichen Vergleichs, Kommunizieren mit der Web-Browsing-Software, um eine Quarantänefunktion durchzuführen, und Einfügen von Informationen über die Mehrzahl vordefinierter Templates in jedes Paket der Mehrzahl Pakete, um eine Wiederholung derselben Quarantänefunktion an weiteren Zwischen-Routing-Knoten längs eines Pfades zur Client-Einrichtung zu vermeiden.

## Revendications

1. Système de communication (105) comprenant :
un dispositif client (155, 255, 375, 475, 555, 907) configuré pour exécuter un logiciel de navigation Web ;
un dispositif serveur (151, 307, 407, 907) ; et
un réseau Internet comprenant des noeuds d'acheminement intermédiaires multiples (109, 209, 341, 441, 509, 607, 657, 707, 875), chaque noeud d'acheminement intermédiaire configuré pour recevoir une pluralité de paquets du dispositif serveur destinés au logiciel de navigation Web du dispositif client, comparer chacun de la pluralité de paquets reçus à une pluralité de modèles prédéfinis, chacun de la pluralité de modèles prédéfinis se rapportant à un logiciel de publicité, et après identification d'une comparaison réussie, communiquer avec le logiciel de navigation Web pour exécuter une fonction de quarantaine et incorporer une information relative à la pluralité de modèles prédéfinis dans chaque paquet de la pluralité de paquets pour éviter une répétition de la même fonction de quarantaine au niveau d'autres noeuds d'acheminement intermédiaires sur un chemin vers le dispositif client.

2. Système de communication selon la revendication 1, dans lequel chaque noeud d'acheminement intermédiaire est en outre configuré pour sélectionner la fonction de quarantaine sur la base de caractéristiques du logiciel de publicité identifié par l'intermédiaire de la comparaison réussie.

3. Système de communication selon la revendication 1, dans lequel chaque noeud d'acheminement intermédiaire est en outre configuré pour communiquer avec le logiciel de navigation Web pour présenter un défi humain.

4. Système de communication selon la revendication 1, dans lequel chaque noeud d'acheminement intermédiaire, après identification de la comparaison réussie, est en outre configuré pour interagir avec le dispositif serveur pour ce qui concerne la comparaison réussie.

5. Ensemble de circuits destiné à une utilisation dans un noeud d'acheminement intermédiaire destiné à une utilisation dans un réseau Internet comprenant une pluralité de noeuds d'acheminement intermédiaires (109, 209, 341, 441, 509, 607, 657, 707, 875), chacun configuré pour recevoir une pluralité de paquets d'un dispositif serveur (151, 307, 407, 907) destinés à un logiciel de navigation Web d'un dispositif client (155, 255, 375, 475, 555, 907)
dans lequel l'ensemble de circuits est configuré pour :
comparer chacun de la pluralité de paquets reçus à une pluralité de modèles prédéfinis, chacun de la pluralité de modèles prédéfinis se rapportant à un logiciel de publicité, et après identification d'une comparaison réussie, communiquer avec le logiciel de navigation Web pour exécuter une fonction de quarantaine et incorporer une information relative à la pluralité de modèles prédéfinis dans chaque paquet de la pluralité de paquets pour éviter une répétition de la même fonction de quarantaine au niveau d'autres noeuds d'acheminement intermédiaires sur un chemin vers le dispositif client.

6. Ensemble de circuit de noeud de réseau selon la revendication 5, dans lequel la fonctionnalité de traitement de logiciel de publicité est configurée pour interrompre la fourniture du paquet au dispositif de destination.

7. Procédé destiné à une utilisation dans un noeud d'acheminement intermédiaire destiné à une utilisation dans un réseau Internet comprenant une pluralité de noeuds d'acheminement intermédiaires (109, 209, 341, 441, 509, 607, 657, 707, 875), chacun configuré pour recevoir une pluralité de paquets d'un dispositif serveur (151, 307, 407, 907) destinés à un logiciel de navigation Web d'un dispositif client (155, 255, 375, 475, 555, 907),
dans lequel le procédé comprend :
la comparaison de chacun de la pluralité de paquets reçus à une pluralité de modèles prédéfinis, chacun de la pluralité de modèles prédéfinis se rapportant à un logiciel de publicité,
après identification d'une comparaison réussie, la communication avec le logiciel de navigation Web pour exécuter une fonction de quarantaine et incorporer une information relative à la pluralité de modèles prédéfinis dans chaque paquet de la pluralité de paquets pour éviter une répétition de la même fonction de quarantaine au niveau d'autres noeuds d'acheminement intermédiaires sur un chemin vers le dispositif client.
